(19) Europäisches Patentamt European Patent Office Office européen des brevets

(11) **EP 2 679 767 B1**

(12) **EUROPÄISCHE PATENTSCHRIFT**

(45) Veröffentlichungstag und Bekanntmachung des Hinweises auf die Patenterteilung:
**22.03.2023 Patentblatt 2023/12**

(21) Anmeldenummer: **13185644.5**

(22) Anmeldetag: **06.02.2009**

(51) Internationale Patentklassifikation (IPC):
**E21C 41/26** (2006.01)   **E01C 23/088** (2006.01)
**E02F 9/20** (2006.01)

(52) Gemeinsame Patentklassifikation (CPC):
**E21C 41/26; E01C 23/088**

(54) **Fräsmaschine sowie Verfahren zum Abbauen von Fräsgut einer Verkehrsfläche**

Milling machine and method of removing mining material from a traffic surface

Fraise et procédé de décomposition de produits de fraisage d'une surface routière

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **08.02.2008 DE 102008008260**

(43) Veröffentlichungstag der Anmeldung:
**01.01.2014 Patentblatt 2014/01**

(62) Dokumentnummer(n) der früheren Anmeldung(en) nach Art. 76 EPÜ:
**09707954.5 / 2 242 903**

(73) Patentinhaber: **Wirtgen GmbH**
**53578 Windhagen (DE)**

(72) Erfinder:
• **von der Schönebeck, Winfried**
**53560 Vettelschoß (DE)**
• **Wagner, Stefan**
**53604 Bad Honnef (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
DE-A1- 19 628 420    JP-A- H1 150 415
US-A- 4 863 009     US-B1- 6 336 684

• DATABASE COMPENDEX [Online] ENGINEERING INFORMATION, INC., NEW YORK, NY, US; 1986, WOLSKI JAN K: "OPTIMIZATION OF BUCKET WHEEL EXCAVATOR AND PIT PARAMETERS IN APPLICATION TO OVERBURDEN STRIPPING.", XP002538700, Database accession no. EIX87110183729 & 1986 A. A. BALKEMA, 1986, Seiten 43-55,
• DATABASE COMPENDEX [Online] ENGINEERING INFORMATION, INC., NEW YORK, NY, US; Oktober 1994 (1994-10), GOVE D ET AL: "Optimizing truck-loader matching", XP002538699, Database accession no. EIX95112431085 & MINING ENGINEERING 1994 OCT SOC FOR MINING, METALLURGY & EXPLORATION INC, Bd. 46, Nr. 10, Oktober 1994 (1994-10), Seiten 1179-1185,
• WOLSKI JAN K: "Asphalt Milling 2", USE OF COMPUTERS IN THE COAL INDUSTRY , 3 May 2007 (2007-05-03), page 1, XP054976205, Retrieved from the Internet: URL:https://www.youtube.com/watch?v=MvUUL j yaZKQ [retrieved on 2019-07-10]

**Beschreibung**

Die Erfindung betrifft ein Verfahren nach Anspruch 1, sowie eine Fräsmaschine nach Anspruch 6.

Die Fräsmaschine kann das abgebaute Material so kleinstückig brechen, dass es ohne oder mit nur geringer Nachbehandlung weiterverarbeitet werden kann. Das von einer Fräswalze abgearbeitete Material wird über Förderbänder auf einen neben der Fräsmaschine fahrenden Lastkraftwagen abgeladen. Dabei wird das Fräsgut geschnitten, zerkleinert und letztendlich verladen. Eine derartige Fräsmaschine ist beispielsweise aus der EP 1 983 106 bekannt.

Ein bekanntes Verfahren sieht vor, die Bodenoberfläche entlang einer vorgegebenen Frässpur vorgegebener Länge zu fräsen. Hierbei wird der Fräsvorgang hinsichtlich Frästiefe und Fräsgeschwindigkeit entsprechend der Maschinenleistung und der Art des Fräsgutes optimiert.

Das Fräsgut wird über eine Fördereinrichtung zu mindestens einem Behälter eines neben der Fräsmaschine mitfahrenden Lastkraftwagens mit einem vorgegebenen maximalen Ladevolumen je Ladung transportiert. Ist der Lastkraftwagen vollständig beladen, wird dieser durch einen unbeladenen Lastkraftwagen ersetzt.

JP H11 50415 zeigt beispielsweise eine Steuerung zwischen einer Fräsmaschine und einem mitfahrenden Lastkraftwagen.

Ein Problem besteht darin, den Behälter eines Lastkraftwagens gleichmäßig zu beladen, um das Behältervolumen maximal ausnutzen, zu können.

Der Erfindung liegt daher die Aufgabe zugrunde, ein Verfahren zum Fräsen einer Bodenoberfläche anzugeben, das wirtschaftlicher durchgeführt werden kann.

Zur Lösung dieser Aufgabe dienen die Merkmale der Ansprüche 1 und 6.

Hierzu ist entsprechend einem Verfahren, das nicht Teil der Erfindung ist, vorgesehen,

- das Steuern der Fahrgeschwindigkeit oder der aktuellen Position des Lastkraftwagens in Abhängigkeit,
- von der Vorschubgeschwindigkeit, oder
- von dem in der aktuellen Frässpur zurückgelegten Weg der Fräsmaschine, oder
- der aktuellen Abwurfposition der Fördereinrichtung.

Zur Verbesserung der Effektivität des Fräsprozesses und der gleichmäßigen Beladung des Behälters kann demzufolge vorgesehen sein, dass die Fahrgeschwindigkeit oder die aktuelle Position des Lastkraftwagens in Abhängigkeit von der Vorschubgeschwindigkeit der Fräsmaschine von dem in der aktuellen Frässpur zurückgelegten Weg der Fräsmaschine (3), oder von der aktuellen Abwurfposition der Fördereinrichtung (2) in Relation zu dem Lastkraftwagen (1) derart gesteuert wird, dass die Ladefläche des mindestens einen Behälters gleichmäßig und vollständig über die Länge bis zum maximalen Ladevolumen beladen wird.

Dies kann auch dadurch geschehen, dass der Beladungsvorgang durch Steuern der Fahrgeschwindigkeit des Lastkraftwagens in Abhängigkeit von der Vorschubgeschwindigkeit der Fräsmaschine und von dem gemessenen Beladungszustand eines Behälters geregelt wird.

Es kann des weiteren vorgesehen sein, dass die Fahrgeschwindigkeit oder die aktuelle Position des Lastkraftwagens derart gesteuert wird, dass die Abwurfposition der Fördereinrichtung oberhalb des mindestens einen Behälters von einer vorderen oder hinteren Endposition innerhalb des Behälters zu einer in Längsrichtung gegenüberliegenden Endposition wandert.

Das Steuern der Fahrgeschwindigkeit des Lastkraftwagens erfolgt vorzugsweise derart, dass die Fahrgeschwindigkeit des Lastkraftwagens höher oder gleich der Vorschubgeschwindigkeit der Fräsmaschine ist.

Alternativ kann vorgesehen sein, dass die Fahrgeschwindigkeit des Lastkraftwagens derart gesteuert wird, dass die Fahrgeschwindigkeit eine konstante positive Differenz zu der Vorschubgeschwindigkeit der Fräsmaschine aufweist.

Alternativ kann vorgesehen sein, dass die Fahrgeschwindigkeit des Lastkraftwagens derart gesteuert wird, dass die Fahrgeschwindigkeit des Lastkraftwagens diskontinuierlich verändert wird.

Zu Beginn des Beladevorgangs kann vorgesehen sein, dass die Steuerung der Fahrgeschwindigkeit des Lastkraftwagens mit einer höheren Fahrgeschwindigkeit als die Vorschubgeschwindigkeit der Fräsmaschine erst dann beginnt, wenn an der vorderen Endposition eine ausreichend hohe Anfangsschüttung abgeworfen worden ist.

Im Folgenden wird unter Bezugnahme auf die Zeichnungen ein Ausführungsbeispiel der Erfindung näher erläutert.

Es zeigen:

Fig. 1 das Beladen eines Behälters eines LKWs über ein Transportband der Fräsmaschine,

Fig. 2 eine Seitenansicht einer Fräsmaschine,

Fig. 3   eine Draufsicht auf eine Fräsmaschine, und

Fig. 4   eine Grundstruktur der LKW-Steuerung.

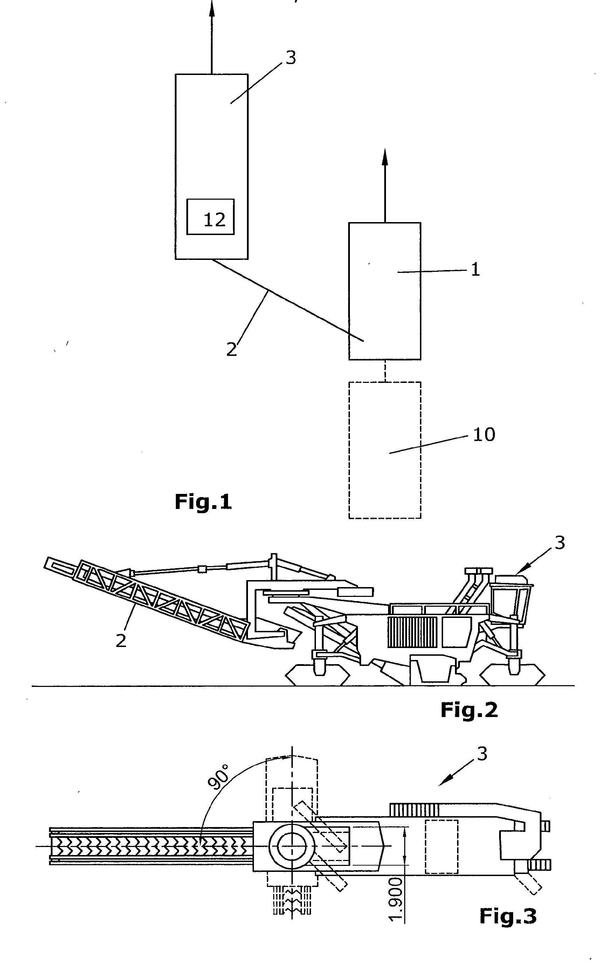

Wie aus Fig. 1 ersichtlich, wird das von der Fräsmaschine 3 abgearbeitete Fräsgut, z.B. ein Asphalt- oder Betonbelag einer Verkehrsfläche über ein Transportband 2 auf einen Lastkraftwagen 1 geladen, der auch einen oder mehrere Anhänger 10 aufweisen kann.

Fig. 2 zeigt eine Fräsmaschine 3, die eine Steuerung 12 zum Steuern des Abarbeitungsprozesses beim Abfräsen von Schichten einer Verkehrsfläche aus Asphalt oder Beton und zum Steuern des Abtransports der abgearbeiteten Fräsgutes zum Beladen eines Lastkraftwagens 1 aufweist.

Die Bodenoberfläche wird entlang einer vorgegebenen Frässpur vorgegebener Länge abgearbeitet.

Das Fräsgut wird über eine Fördereinrichtung 2, z. B. ein Transportband, zu einem Behälter eines neben der Fräsmaschine mitfahrenden Lastkraftwagens 1 mit einem vorgegebenen maximalen Ladevolumen je Ladung befördert.

Ein vollständig beladener Lastkraftwagen wird durch einen unbeladenen ersetzt, wenn das maximale Ladevolumen einer Lastkraftwagen-Ladung erreicht ist.

Die Steuerung 12 kann die Vorschubgeschwindigkeit der Fräsmaschine auf eine vorgewählte Fräsleistung, vorzugsweise eine maximale Fräsleistung, einstellen.

Die Steuerung 12 kann desweiteren die Fahrgeschwindigkeit des Lastkraftwagens in Abhängigkeit von der Vorschubgeschwindigkeit der Fräsmaschine derart steuern, dass die Ladefläche des mindestens einen Behälters gleichmäßig und vollständig über die Länge bis zum maximalen Ladevolumen beladen wird.

Die Steuerung 12 kann den Beladungsvorgang mindestens eines Behälters durch Steuern der Fahrgeschwindigkeit des Lastkraftwagens in Abhängigkeit von der Vorschubgeschwindigkeit der Fräsmaschine und von dem gemessenen Beladungszustand des Behälters regeln.

Die Steuerung 12 kann alternativ die Fahrgeschwindigkeit oder die aktuelle Position des Lastkraftwagens in Abhängigkeit von der Vorschubgeschwindigkeit oder von dem in der aktuellen Frässpur zurückgelegten Weg der Fräsmaschine oder von der aktuellen Abwurfposition der Fördereinrichtung 2 in Relation zu dem Lastkraftwagen steuern.

Dabei kann die Steuerung 12 die Fahrgeschwindigkeit oder die aktuelle Position des Lastkraftwagens 1 derart steuern, dass die Abwurfposition der Fördereinrichtung oberhalb des mindestens einen Behälters von einer vorderen oder hinteren Endposition innerhalb des Behälters zu einer in Längsrichtung gegenüberliegenden Endposition wandert.

Vorzugsweise kann die Steuerung die Fahrgeschwindigkeit des Lastkraftwagens derart steuern, dass die Fahrgeschwindigkeit des Lastkraftwagens höher oder gleich der Vorschubgeschwindigkeit der Fräsmaschine ist.

Die Steuerung 12 kann auch die Fahrgeschwindigkeit des Lastkraftwagens erst dann erhöhen, wenn an der vorderen Endposition eine ausreichend hohe Anfangsschüttung vorliegt.

Der grundlegende Vorteil des folgenden Steuerkonzepts besteht in der Tatsache, dass ein fortlaufender Beladungsvorgang zwischen LKW und Fräsmaschine, bei dem sich beide Maschinen mit konstanter Geschwindigkeit bewegen, vom Steuerkonzept her besonders leicht durchführbar ist und fast keine Kommunikation zwischen der Fräsmaschine und dem LKW erfordert (außer am Beginn und am Ende des Beladungsvorgangs).

Das Prinzip des vorliegenden Erfindung besteht im Steuern der LKW-Geschwindigkeit und -Richtung als Funktion der tatsächlichen Fräsmaschinen-Position und Geschwindigkeit (bzw. der Förderband-Position und -Geschwindigkeit der Fräsmaschine), der Schneidtiefe und -breite der Fräsmaschine und anderer im Voraus bekannter Prozessparameter wie z.B. der maximalen Nutzlast des LKW, der äquivalenten Beladungslänge des LKW und der Dichte des abgefrästen Materials.

Die bekannten Prozessparameter und -variablen sind:

$F_T$, in [$m$]: Frästiefe

$F_B$ in [$m$]: Fräsbreite

$v_{SM}$ in [$m$/min] : Fräsmaschinen-Vorschubgeschwindigkeit

$M_{pay}$ in [$t$]: Nutzlast des LKW

$L$ in [-]: Lockerungsfaktor, Relation zwischen der Dichte des geschnittenen Materials und der Dichte des geladenen Materials

$\rho_{mat}$ in [$t/m^3$] : Dichte des abgebauten Materials

$l_{lc}$ in [$m$]: äquivalente LKW-Beladungslänge

Unbekannte und zu bestimmende Prozessvariablen (in Richtung der Auflösung):

$t_{lc}$ in [min] : LKW-Beladezeit

$Q_{lc}$ in [$m^3$]: Materialvolumen für einen Beladezyklus

$\dot{q}$ in [$m^3$ /min] : Materialströmungsrate aus der Fräsmaschine

Atr$\alpha$y, cr in [$m^2$]: beladbarer Querschnittsbereich der LKW-Ladekippe

$v_{Truck}$ in [m/min] : LKW-Geschwindigkeit in Vorschubrichtung

Dabei bedeuten: [min]: Minuten [$m$]: Meter [$m^3$/min]: Kubikmeter pro Minute

Der LKW-Beladungs-Querschnittsbereich als Funktion der Fräsmaschinen-Geschwindigkeit, der Frästiefe, der Fräsbreite und der LKW-Geschwindigkeit lässt sich berechnen unter Verwendung der folgenden einfachen Annahmen und Relationen:

- Das Material kann ohne einen Schüttwinkel auf den LKW geladen werden (siehe Fig. 8 zur Veranschaulichung).
- Der LKW 1 und die Fräsmaschine 3 bewegen sich mit konstanter Geschwindigkeit.
- Der LKW 1 startet das Laden am Vorderende der Ladekippe und bewegt sich schneller als die Fräsmaschine.
- Es erfolgt keine Speicherung von Material in der Fräsmaschine 3.
- Es erfolgt ein konstantes Lockern des geschnittenen Materials, d.h. das von der Fördervorrichtung zugeführte Material ist gleich dem geschnittenen Material, multipliziert mit dem Lockerungsfaktor.

Das von der Fräsmaschine 3 während einer bestimmten Beladungszeit $t_{lc}$ zugeführte Material kann berechnet werden aus

$$Q_{lc} = F_T \cdot F_B \cdot v_{SM} \cdot L \cdot t_{lc} = \dot{q} \cdot t_{lc}\,.$$

Der resultierende Beladungs-Querschnittsbereich der LKW-Ladekippe kann berechnet werden aus

$$A_{tray,cr} = Q_{lc} / l_{lc}$$

wobei $l_{lc}$, eine äquivalente Beladungslänge unter der Annahme repräsentiert, dass die auf dem LKW platzierte Ladung einem Quader gleicht.
Durch Ersetzen des Materialvolumens und der Beladungslänge erhält man

$$A_{tray,cr} = F_T \cdot F_B \cdot L \cdot \frac{v_{SM}}{v_{Truck} - v_{SM}}\,, \qquad (1)$$

was bedeutet, dass für eine gegebene Schneidtiefe, eine gegebene Schneidbreite und einen gegebenen Lockerungsfaktor der Beladungs-Querschnittsbereich eine Funktion der Fräsmaschinen-Geschwindigkeit und der Differenz von Fräsmaschinen- und LKW-Geschwindigkeit ist. Diese Relation kann sehr leicht geprüft werden. Unter der Annahme, dass der LKW stillsteht ($V_{truck} = 0$), ergibt sich aus der oben angeführten Relation

$$A_{tray,cr} = F_T \cdot F_B \cdot L\,,$$

was bedeutet, dass der von der Fräsmaschine zu fräsende Material-Querschnitt mit dem Lockerungsfaktor multipliziert in dem LKW 1 gespeichert werden muss.
Um nun einen bestimmten Beladungs-Querschnittsbereich der LKW-Ladekippe erhalten zu können, ergibt die Gleichung (1) ein Steuergesetz zum Einstellen der LKW-Geschwindigkeit und/oder der Fräsmaschinen-Geschwindigkeit für eine gegebene Schneidtiefe und -breite. In der Praxis unterliegt der Beladungsbereich einer Beschränkung aufgrund der maximalen Nutzlast der LKW-Ladekippe. Bei einer gegebenen maximalen Nutzlast der LKW-Ladekippe ist das maximale Materialvolumen, das während eines Beladungszyklus geladen werden kann, definiert durch

$$Q_{lc,\max} = M_{pay} / \rho_{mat}\,.$$

Das maximale Materialvolumen kann dann übersetzt werden in einen maximalen Beladungs-Querschnittsbereich

$$A_{tray,cr,\max} = Q_{lc,\max} / l_{lc} \qquad (2).$$

Durch Einsetzen von (2) in (1) und Lösen von (1) für die LKW-Geschwindigkeit ergibt sich ein Feedforward-Steuergesetz für die LKW-Geschwindigkeit:

$$v_{Truck} = v_{SM}\left(1 + \frac{F_T \cdot F_B \cdot L \cdot \rho_{mat} \cdot l_{lc}}{M_{Pay}}\right).$$

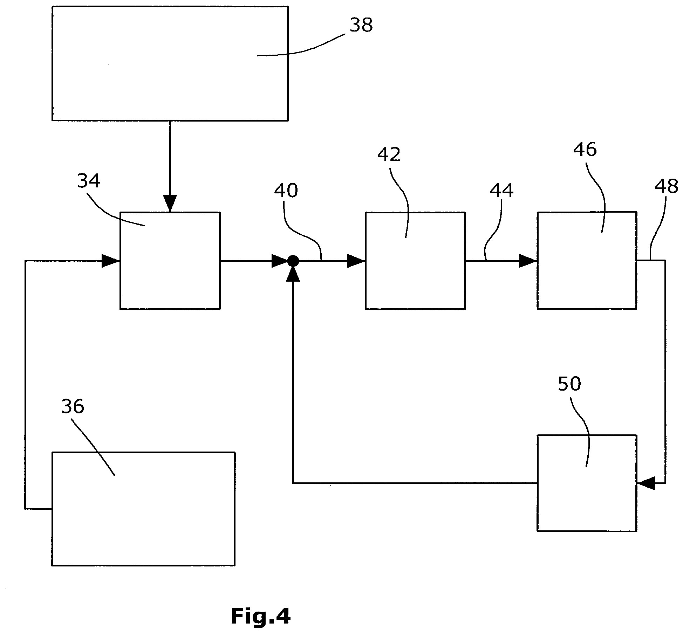

In Fig. 4 ist die Grundstruktur einer LKW-Steuerung dargestellt. Die Lkw-Positions- und Geschwindigkeits-Feedforward-Steuerung 34 enthält die Feedforward-Steuerregel für die LKW-Geschwindigkeit in Abhängigkeit von der Fräsmaschinengeschwindigkeit und das Abbilden der Bandposition auf die LKW-Position. Die Lkw-Positions- und Geschwindigkeits-Feedforward-Steuerung 34 erhält Messwerte 36, wie beispielsweise absolute Bandpositionen und Bandgeschwindigkeiten, tatsächliche Schneidtiefe und tatsächliche Fräsmaschinen-Geschwindigkeit. Ferner existieren Parameter 38, wie beispielsweise die maximale Nutzlast des LKWs, der Lockerungsfaktor, die Materialdichte, die äquivalente Beladungslänge der Ladekippe oder die Fräsbreite. Mit 40 sind die befohlenen Geschwindigkeiten und Positionen (Richtung und Höhe), mit 42 die LKW-Steuervorrichtung, mit 44 die Steuerbefehle, Geschwindigkeitsbefehle, mit 46 der LKW, mit 48 die absolute LKW-Position und mit 50 das ATS/GPS dargestellt.

## Patentansprüche

1. Verfahren zum Abfräsen von Schichten einer Verkehrsfläche aus Asphalt oder Beton mit einer Fräsmaschine (3),

   - durch Fräsen der Bodenoberfläche entlang einer vorgegebenen Frässpur,
   - durch Transportieren des Fräsgutes über eine Fördereinrichtung (2) zu mindestens einem Behälter eines neben der Fräsmaschine (3) mitfahrenden Lastkraftwagens (1) mit einem vorgegeben maximalen Ladevolumen je Ladung,
   - durch Ersetzen eines vollständig beladenen Lastkraftwagens (1) durch einen unbeladenen, wenn das maximale Ladevolumen einer Ladung erreicht ist,

   **gekennzeichnet durch**
   das Steuern der Fahrgeschwindigkeit und Richtung des Lastkraftwagens (1) in Abhängigkeit

   - von der Schneidtiefe und Schneidbreite der Fräsmaschine, der maximalen Nutzlast des Lastkraftwagens und der Dichte des abgefrästen Materials und von der Vorschubgeschwindigkeit und Position der Fräsmaschine (3).

2. Verfahren nach Anspruch 1, **gekennzeichnet durch** das Steuern der Fahrgeschwindigkeit oder der aktuellen Position des Lastkraftwagens (1) derart, dass die Abwurfposition der Fördereinrichtung oberhalb des mindestens einen Behälters von einer vorderen Endposition innerhalb des Behälters zu einer in Längsrichtung gegenüberliegenden Endposition wandert.

3. Verfahren nach einem der Ansprüche 1 oder 2, **gekennzeichnet durch** das Steuern der Fahrgeschwindigkeit des Lastkraftwagens (1) derart, dass die Fahrgeschwindigkeit des Lastkraftwagens (1) höher als die Vorschubgeschwindigkeit der Fräsmaschine (3) ist.

4. Verfahren nach einem der Ansprüche 1 bis 3, **gekennzeichnet durch** das Steuern der Fahrgeschwindigkeit des Lastkraftwagens (1) derart, dass die Fahrgeschwindigkeit des Lastkraftwagens (1) eine konstante positive Differenz zu der Vorschubgeschwindigkeit der Fräsmaschine (3) aufweist.

5. Verfahren nach Anspruch 1 **gekennzeichnet durch** das Steuern der Fahrgeschwindigkeit und Fahrtrichtung des Lastkraftwagens (1) in Abhängigkeit der aktuellen Position und Geschwindigkeit der Fräsmaschine (3) oder der Position und Geschwindigkeit der Fördereinrichtung (2).

6. System aus Fräsmaschine und zumindest einem Lastkraftwagen, wobei die Fräsmaschine eine Steuerung (12) zum Steuern des Abarbeitungsprozesses beim Abfräsen von Schichten einer Verkehrsfläche aus Asphalt oder Beton und zum Steuern des Abtransports des abgearbeiteten Fräsgutes zum Beladen eines Lastkraftwagens (1) aufweist, wobei die Fräsmaschine (3)

- die Bodenoberfläche entlang einer vorgegebenen Frässpur abarbeitet,
- das Fräsgut über eine Fördereinrichtung (2) zu mindestens einem Behälter eines neben der Fräsmaschine (3) mitfahrenden Lastkraftwagens (1) mit einem vorgegebenen maximalen Ladevolumen je Ladung befördert, und wobei
- ein vollständig beladener Lastkraftwagen (1) durch einen unbeladenen ersetzt wird, wenn das maximale Ladevolumen einer Lastkraftwagen-Ladung erreicht ist,

**dadurch gekennzeichnet,**
**dass** die Fahrgeschwindigkeit und die Richtung des Lastkraftwagens (1)

- in Abhängigkeit von der Schneidtiefe und Schneidbreite der Fräsmaschine, der maximalen Nutzlast des Lastkraftwagens und der Dichte des abgefrästen Materials und in Abhängigkeit von der Vorschubgeschwindigkeit und Position der Fräsmaschine (3), steuerbar ist.

7. System nach Anspruch 6 , **dadurch gekennzeichnet dass** die Fahrgeschwindigkeit oder die aktuelle Position des Lastkraftwagens (1) derart steuerbar ist, dass die Abwurfposition der Fördereinrichtung (2) oberhalb des mindestens einen Behälters von einer vorderen Endposition innerhalb des Behälters zu einer in Längsrichtung gegenüberliegenden Endposition wandert.

8. System nach einem der Ansprüche 6 bis 7, **dadurch gekennzeichnet dass** die Fahrgeschwindigkeit des Lastkraftwagens (1) derart steuerbar ist, dass die Fahrgeschwindigkeit des Lastkraftwagens (1) höher oder gleich der Vorschubgeschwindigkeit der Fräsmaschine (3) ist.

9. System nach einem der Ansprüche 6 bis 8, **dadurch gekennzeichnet, dass** die Fahrgeschwindigkeit des Lastkraftwagens (1) derart steuerbar ist, dass die Fahrgeschwindigkeit des Lastkraftwagens (1) eine konstante positive Differenz zu der Vorschubgeschwindigkeit der Fräsmaschine (3) aufweist.

10. System nach Anspruch 9, **dadurch gekennzeichnet, dass** die Fahrgeschwindigkeit und Fahrtrichtung des Lastkraftwagens (1) in Abhängigkeit der aktuellen Position und Geschwindigkeit der Fräsmaschine (3) oder der Position und Geschwindigkeit der Fördereinrichtung (2) steuerbar ist.

**Claims**

1. A method for milling off layers of an asphalt or concrete traffic surface with a milling machine (3)

- by milling the ground surface along a predetermined milling track,
- by transporting the milled material via a conveying device (2) to at least one container of a truck (1) that travels along next to the milling machine (3), said truck (1) having a predetermined maximum loading volume per load, and
- by replacing a fully loaded truck (1) with an unloaded truck when the maximum loading volume of a truck load has been reached,

**characterized by**
controlling the travel speed and direction of the truck (1) as a function of

- the cutting depth and cutting width of the milling machine, the maximum payload of the truck, and the density of the milled material, and the advance speed and position of the milling machine (3).

2. The method according to claim 1, **characterized by** controlling the travel speed or the current position of the truck (1) such that the discharge position of the conveying device above the at least one container moves from a front end position inside the container to an end position that is opposite in longitudinal direction.

3. The method according to any one of claims 1 or 2, **characterized by** controlling the travel speed of the truck (1) such that the travel speed of the truck (1) is higher than the advance speed of the milling machine (3).

4. The method according to any one of claims 1 to 3, **characterized by** controlling the travel speed of the truck (1) such that the travel speed of the truck (1) shows a constant positive difference to the advance speed of the milling machine (3).

5. The method according to claim 1, **characterized by** controlling the travel speed and travel direction of the truck (1) as a function of the current position and speed of the milling machine (3) or the position and speed of the conveying device (2).

6. A system of a milling machine and at least one truck, the milling machine comprising a control (12) for controlling the removal process when milling off layers of an asphalt or concrete traffic surface and for controlling the transporting away of the removed milled material for loading onto a truck (1), wherein the milling machine (3)

   - removes the ground surface along a predetermined milling track,
   - conveys the milled material via a conveying device (2) to at least one container of a truck (1) that travels along next to the milling machine (3), said truck (1) having a predetermined maximum loading volume per load, and wherein
   - a fully loaded truck (1) is replaced with an unloaded truck when the maximum loading volume of a truck load has been reached,

   **characterized in that**
   the travel speed and the direction of the truck (1) is controllable

   - as a function of the cutting depth and cutting width of the milling machine, the maximum payload of the truck, and the density of the milled material, and as a function of the advance speed and the position of the milling machine (3).

7. The system according to claim 6, **characterized in that** the travel speed or the current position of the truck (1) is controllable such that the discharge position of the conveying device (2) above the at least one container moves from a front end position inside the container to an end position that is opposite in longitudinal direction.

8. The system according to any one of claims 6 to 7, **characterized in that** the travel speed of the truck (1) is controllable such that the travel speed of the truck (1) is higher than or equal to the advance speed of the milling machine (3).

9. The system according to any one of claims 6 to 8, **characterized in that** the travel speed of the truck (1) is controllable such that the travel speed of the truck (1) shows a constant positive difference to the advance speed of the milling machine (3).

10. The system according to claim 9, **characterized in that** the travel speed and the travel direction of the truck (1) is controllable as a function of the current position and speed of the milling machine (3) or the position and speed of the conveying device (2).

**Revendications**

1. Procédé d'enlèvement de couches d'une surface de circulation en asphalte ou en béton avec une fraiseuse (3),

   - par fraisage de la surface du sol le long d'une bande de fraisage prédéfinie,
   - par transport du produit de fraisage, par le biais d'un dispositif convoyeur (2), vers au moins un conteneur d'un camion (1) se déplaçant à côté de la fraiseuse (3) avec un volume de chargement maximal prédéfini par charge,
   - par remplacement d'un camion complètement chargé (1) par un camion non chargé lorsque le volume de chargement maximal prédéfini d'une charge est atteint,

**caractérisé par**
la commande de la vitesse de déplacement et de la direction du camion (1) en fonction

- de la profondeur de coupe et de la largeur de coupe de la fraiseuse, de la charge utile maximale du camion et de la densité du matériau fraisé et en fonction de la vitesse d'avance et de la position de la fraiseuse (3).

2. Procédé selon la revendication 1, **caractérisé par** la commande de la vitesse de déplacement ou de la position actuelle du camion (1) de telle sorte que la position de déversement du dispositif convoyeur au-dessus de l'au moins un conteneur se déplace d'une position finale en avant à l'intérieur du conteneur jusqu'à une position opposée dans la direction longitudinale.

3. Procédé selon l'une des revendications 1 ou 2, **caractérisé par** la commande de la vitesse de déplacement du camion (1) de telle sorte que la vitesse de déplacement du camion (1) est supérieure à la vitesse d'avance de la fraiseuse (3).

4. Procédé selon l'une des revendications 1 à 3, **caractérisé par** la commande de la vitesse de déplacement du camion (1) de telle sorte que la vitesse de déplacement du camion (1) comporte une différence positive constante par rapport à la vitesse d'avance de la fraiseuse (3).

5. Procédé selon la revendication 1, **caractérisé par** la commande de la vitesse de déplacement et de la direction de déplacement du camion (1) en fonction de la position actuelle et de la vitesse de la fraiseuse (3) ou en fonction de la position et de la vitesse du dispositif convoyeur (2).

6. Système constitué de la fraiseuse et d'au moins un camion, dans lequel la fraiseuse comporte une commande (12) destinée à commander le processus de traitement par enlèvement de couches d'une surface de circulation en asphalte ou en béton destinée à commander l'évacuation du produit de fraisage traité pour le chargement d'un camion (1), dans lequel la fraiseuse (3)

- traite la surface du sol le long d'une bande de fraisage prédéfinie,
- le produit de fraisage est convoyé, par le biais d'un dispositif convoyeur (2), vers au moins un conteneur d'un camion (1) se déplaçant à côté de la fraiseuse (3) avec un volume de chargement maximal prédéfini par charge, et dans lequel
- un camion complètement chargé (1) est remplacé par un camion non chargé lorsque le volume de chargement maximal prédéfini d'une charge de camion est atteint,

**caractérisé**
**en ce que** la vitesse de déplacement et la direction du camion (1)

- peuvent être commandées en fonction de la profondeur de coupe et de la largeur de coupe de la fraiseuse, de la charge utile maximale du camion et de la densité du matériau fraisé et en fonction de la vitesse d'avance et de la position de la fraiseuse (3).

7. Système selon la revendication 6, **caractérisé en ce que** la vitesse de déplacement ou la position actuelle du camion (1) peut être commandée de telle sorte que la position de déversement du dispositif convoyeur (2) au-dessus de l'au moins un conteneur se déplace d'une position finale en avant à l'intérieur du conteneur jusqu'à une position opposée dans la direction longitudinale.

8. Système selon l'une des revendications 6 à 7, **caractérisé en ce que** la vitesse de déplacement du camion (1) peut être commandée de telle sorte que la vitesse de déplacement du camion (1) est supérieure ou égale à la vitesse d'avance de la fraiseuse (3).

9. Système selon l'une des revendications 6 à 8, **caractérisé en ce que** la vitesse de déplacement du camion (1) peut être commandée de telle sorte que la vitesse de déplacement du camion (1) comporte une différence positive constante par rapport à la vitesse d'avance de la fraiseuse (3).

10. Système selon la revendication 9, **caractérisé en ce que** la vitesse de déplacement et de la direction de déplacement du camion (1) peuvent être commandées en fonction de la position actuelle et de la vitesse de la fraiseuse (3) ou en fonction de la position et de la vitesse du dispositif convoyeur (2).

**Fig.1**

**Fig.2**

**Fig.3**

9

**Fig.4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1983106 A
- JP H1150415 B